# DEMANDE DE BREVET EUROPEEN

(11) **EP 0 611 238 A1**
(43) Date de publication de la demande: **17.08.1994**
(21) Numéro de dépôt: 94440010.0
(22) Date de dépôt: 09.02.1994
(51) Int. Cl.: G11B 15/68

(54) **Dispositif d'alimentation automatique, notamment pour cassettes ou cartouches empilables avec emboîtement et ensemble de chargement/déchargement comportant un tel dispositif**

(30) Priorité: 12.02.1993 FR 9301753
(71) Demandeur: AUTOMATISME ET PRODUCTIQUE APPLIQUES (Société Anonyme), F-67380 Lingolsheim (FR)
(72) Inventeur: Kuntz, Claude, F-67680 Epfig (FR)
(74) Mandataire: Nuss, Pierre

(57) **Abrégé**

La présente invention a pour objet un dispositif d'alimentation automatique, notamment pour cassettes ou cartouches empilables avec emboîtement et un ensemble de chargement/déchargement comportant un tel dispositif.

Dispositif caractérisé en ce qu'il est principalement constitué, d'une part, par un magasin (2) pour le maintien d'une pile importante de cassettes (3) gerbées avec emboîtement, d'autre part, par un mécanisme d'extraction (4) d'au moins une cassette (3) au niveau de la partie inférieure de la pile et, enfin, un moyen de transport (6) de la ou des cassettes (3) extraites de la pile vers l'entrée d'une machine de traitement (7), lesdits mécanisme d'extraction (4) et moyen de transport (6) étant actionnés par des moyens d'entraînement commandés par un module de contrôle.

## Description

La présente invention concerne le domaine du chargement et de l'évacuation d'éléments ou d'objets empilés, notamment lorsque ces derniers sont empilés avec emboîtement et doivent être manipulés de manière individuelle, et elle a pour objet un dispositif d'alimentation automatique, notamment pour cassettes ou cartouches empilables avec emboîtement, ainsi qu'un ensemble de chargement/déchargement comportant un tel dispositif.

Actuellement, de nombreuses machines de traitement ne possèdent pas, au niveau de leur entrée, de magasins d'alimentation de grande capacité permettant de stocker une grande quantité d'objets à traiter et d'introduire ces derniers, individuellement ou par petits groupes, à l'intérieur de ladite machine.

En outre, les machines de traitement possédant de tels magasins de grande capacité sont d'un prix de revient nettement plus élevé et lesdits magasins font partie intégrante desdites machines, sans être amovibles ou adaptables sur d'autres machines du même type.

Cet inconvénient se présente notamment pour les machines de traitement de cassettes ou de cartouches empilables avec emboîtement et pouvant par conséquent être stockées et manipulées par piles entières.

Par ailleurs, ces machines de traitement ne comportent aucun dispositif d'évacuation des cassettes ou cartouches traitées,en les regroupant notamment en piles.

La présente invention a notamment pour objet de pallier l'ensemble des inconvénients précités.

A cet effet, elle a pour objet un dispositif d'alimentation automatique pour cassettes, cartouches ou objets similaires empilables avec emboîtement, destiné au chargement d'une machine de traitement, notamment de lecture et/ou d'écriture, desdites cassettes, cartouches ou objets similaires, caractérisé en ce qu'il est principalement constitué, d'une part, par un magasin essentiellement vertical pour le maintien d'une pile importante de cassettes ou de cartouches gerbées avec emboîtement, d'autre part, par un mécanisme d'extraction d'au moins une cassette ou cartouche au niveau de la partie inférieure de la pile et, enfin, un moyen de transport de la ou des cassettes ou cartouches extraites de la pile vers l'entrée de la machine de traitement, lesdits mécanisme d'extraction et moyen de transport étant actionnés par des moyens d'entraînement commandés par un module de contrôle.

Elle a également pour objet un ensemble de chargement/déchargement, notamment pour une machine de traitement de cassettes ou de cartouches empilables avec emboîtement, caractérisé en ce qu'il comporte, d'une part, un dispositif d'alimentation automatique tel que décrit ci-dessus et d'autre part, un dispositif d'évacuation des cassettes ou cartouches traitées, éjectées par la machine de traitement, composé d'une unité d'empilage des cassettes ou cartouches éjectées par la machine de traitement et d'une unité d'évacuation des piles de cassettes ou de cartouches ainsi formées, se présentant préférentiellement sous la forme d'une bande transporteuse.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue schématique en élévation latérale du dispositif d'alimentation conforme à l'invention ;
la figure 2 est une vue simplifiée en coupe selon A-A du dispositif d'alimentation représenté à la figure 1 ;
les figures 3A et 3B sont des vues partielles du dispositif d'alimentation représenté à la figure 1 montrant la mise en oeuvre du mécanisme d'extraction, et,
la figure 4 est une vue schématique en élévation latérale de l'ensemble de chargement/déchargement selon l'invention.

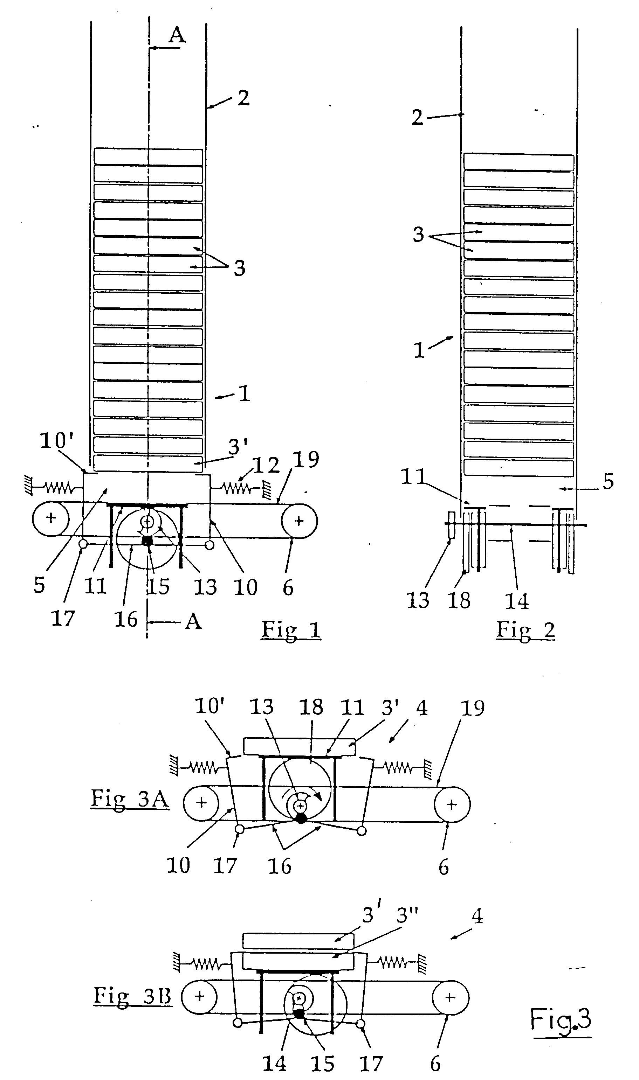

Conformément à l'invention, et comme le montrent les figures 1, 2, 3A et 3B des dessins annexés, le dispositif d'alimentation est principalement constitué d'une part, par un magasin 2 essentiellement vertical pour le maintien d'une pile importante de cassettes 3 ou de cartouches gerbées avec emboîtement, d'autre part, par un mécanisme d'extraction 4 d'au moins une cassette 3 ou cartouche au niveau de la partie inférieure 5 de la pile et, enfin, un moyen de transport 6 de la ou des cassettes 3 ou cartouches extraites de la pile vers l'entrée de la machine de traitement 7, lesdits mécanisme d'extraction 4 et moyen de transport 6 étant actionnés par des moyens d'entraînement commandés par un module de contrôle.

Les cassettes 3 ou cartouches pouvant, en fonc tion des besoins et notamment du mode de fonctionnement de la machine de traitement 7, être libérées ou extraites de la pile, soit de manière individuelle, c'est-à-dire une à une, soit par groupes de deux ou plus.

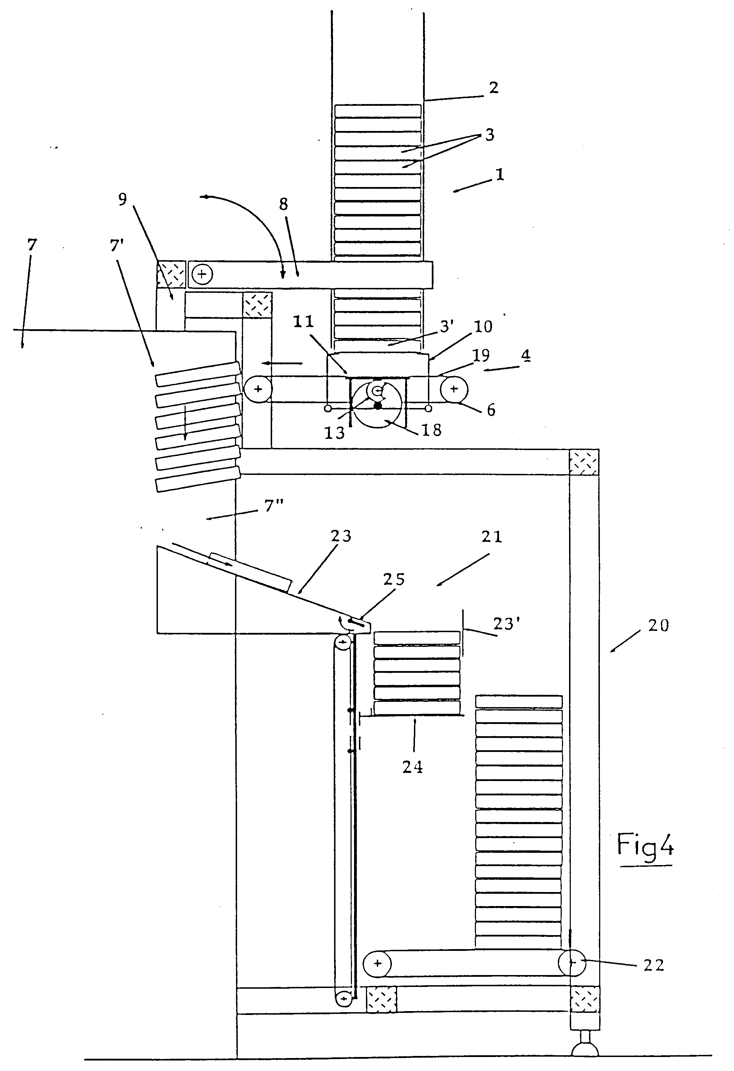

Afin de faciliter l'installation du dispositif d'alimentation 1, de pouvoir régler son positionnement par rapport à la machine de traitement 7 ou encore de pouvoir basculer ledit dispositif dans une position de non utilisation, le magasin 2, le mécanisme d'extraction 4, le moyen de transport 6 et les moyens d'entraînement sont assemblés en une unité structurelle, laquelle est supportée par au moins un bras articulé 8, notamment au moins pivotant, relié à un châssis 9 monté, de manière amovible, sur la machine de traitement 7 ou disposé à proximité de l'entrée 7' de cette dernière (Figure 4).

Ce bras articulé pourra permettre, en outre, d'introduire plus ou moins le moyen de transport 6 dans l'ouverture d'entrée 7' de la machine de traitement 7.

Selon un mode de réalisation préféré de l'invention, représenté notamment aux figures 1, 2, 3a et 3B des dessins annexés, le mécanisme d'extraction 4 est composé, d'une part, de deux bras de soutien 10 de la pile dans le magasin 2, escamotables par pivotement, et, d'autre part, de deux plateaux coulissants 11 pour le dépôt d'une ou de plusieurs cassettes 3 ou cartouches, libérées de la pile lors de l'escamotage temporaire des bras de soutien 10, sur le moyen de transport 6, les bras de soutien 10 et les plateaux coulissants 11 étant actionnés de manière synchronisée.

Conformément à une caractéristique de l'invention, les bras de soutien 10 sont sollicités vers leur position escamotée par des moyens ressorts 12 et le positionnement des bras de soutien 10 et, notamment, leur escamotage hors de leur position de soutien de la pile sont commandés au moyen d'au moins une came 13 montée sur un axe 14 relié à un moyen d'actionnement et sur laquelle circule un galet palpeur 15 portant les extrémités de deux tiges de commande 16 formant chacune levier par rapport au bras de soutien 10 correspondant autour du point de pivotement considéré 17 (figures 1, 3A et 3B).

Le galet palpeur 15 circule, par conséquent, sur la surface extérieure de la came 13, en étant appliqué sous pression contre cette dernière, du fait de l'action constante des moyens ressorts 12 transmise au moyen des tiges de commande 16 et par l'intermédiaire des points de pivotement 17.

Comme le montrent également les figures 1, 2, 3A et 3B des dessins annexés, les plateux coulissants 11 sont supportés et déplacés au moyen de disques montés de manière excentrique sur un axe 14 relié à un moyen d'actionnement, entre une position haute, dans laquelle ils sont en contact avec la cassette 3' ou cartouche inférieure de la pile soutenue et supportée par les bras de soutien 10, et une position basse, dans laquelle ils sont disposés dans un plan légèrement inférieur par rapport au plan de la partie porteuse 19 d'une ou de plusieurs bande(s) d'un transporteur à bande(s) constituant le moyen de transport 6, lequel s'étend entre les deux plateaux porteurs 11, sous forme de plaques allongées parallèles soutenant latéralement les cassettes ou cartouches 3'' libérées et/ou inférieures 3', au niveau de deux bords opposés de ces dernières.

En vue d'assurer de manière simple et fiable l'opération synchronisée et concordante des bras de soutien 10 et des plateaux coulissants 11, la came 13 et les disques 18 sont montés, en étant assujettis en rotation, sur le même axe 14 entraîné par un moyen d'entraînement sous forme de moteur électrique commandé par le module de contrôle, non représentés aux dessins annexés.

En vue d'assurer la coordination des mouvements des deux composantes du mécanisme d'extraction, la configuration de la came 13 et son positionnement angulaire sur l'axe 14 par rapport aux disques 18 sont tels que, d'une part, lorsque les plateaux coulissants 11 arrivent en position haute, les bras de soutien 10 sont escamotés hors de leur position de soutien de la pile et que, d'autre part, lesdits bras de soutien 10 sont replacés dans leur position de soutien des cassettes 3 ou cartouches de la pile restant dans le magasin 2, au cours du mouvement de descente concomitant des plateaux coulissants 11 et de la pile, en étant insérés entre la dernière cartouche ou cassette 3'' libérée ou extraite et la cassette 3' ou cartouche inférieure de la pile restant dans le magasin 2.

Le profil de la came 3 sera conformé de telle manière que le galet palpeur 15 se déplace, au cours d'une rotation complète de l'axe 14, sur deux portions de chemins de roulement circulaires présentant des rayons différents par rapport au centre de l'axe 14, déterminant ainsi deux positions différentes des tiges de commandes 16 et, par conséquent, des bras de soutien 10, à savoir une position enclenchée de soutien de la pile et une position escamotée de libération de la pile.

La pile de cassettes ou cartouches 3 présente dans le magasin 2 est, par conséquent, soutenue, entre les phases d'alimentation et de dépilement, par les bras de soutien 10, les parois dudit magasin 2 assurant uniquement le maintien latéral de ladite pile.

Lors d'une phase d'alimentation (de dépilement par le bas), la pile est soutenue par les bras de soutien 10 jusqu'à l'arrivée en position haute des plateaux 11 à coulissement vertical.

Ces derniers soulèvent, à ce moment là (en position haute), légèrement ladite pile, afin de permettre l'escamotage des bras de soutien 10 par pivotement vers l'extérieur, puis assurent une descente contrôlée de ladite pile, en soutenant cette dernière dans le magasin 2, jusqu'à une position prédéterminée permettant la séparation, par un retour en position de soutien des bras 10, de la ou des cassettes ou cartouches 3'' libérées ou extraites d'avec la cassette ou cartouche 3' de la pile restant dans le magasin 2.

Un mouvement de descente complémentaire suivant des plateaux porteurs 11 coulissants assurent ensuite le dépôt de la ou des cassettes ou cartouches 3'' libérées sur le moyen de transport 6, lesdits plateaux 11 étant situés, à la fin de leur mouvement de descente, dans une position légèrement inférieure à la surface d'appui du moyen de transport 6.

Les bras de soutien 10 peuvent avantaqeusement comporter, en vue du support ou du soutien de la pile, des éléments profilés 10' au niveau de leurs extrémités libres, sur lesquelles la cassette 3' ou cartouche inférieure pourra prendre appui.

Selon une caractéristique de l'invention, non représentée aux dessins annexés, le module de contrôle est connecté à la machine de traitement 7 en vue de la transmission d'ordres ou d'informations et/ou comporte des moyens capteurs pour la détermination de l'état de chargement de ladite machine de traitement 7, ledit module de contrôle pouvant, en outre, être relié à des détecteurs de niveau de la pile dans le magasin 2 et à des moyens d'alarme lumineux et/ou sonores, dont le déclenchement peut être commandé lors du dépassement d'un niveau minimal.

La présente invention a également pour objet un ensemble de chargement/déchargement d'une machine de traitement 7 de cassettes 3 ou de cartouches, ledit ensemble comportant, d'une part, un dispositif d'alimentation automatique tel que décrit ci-dessus, et, d'autre part, un dispositif d'évacuation 20 des cassettes 3 ou cartouches traitées, éjectées par la machine de traitement 7, composé d'une unité d'empilage 21 des cassettes 3 ou cartouches éjectées par la machine de traitement 7 et d'une unité d'évacuation 22 des piles de cassettes 3 ou de cartouches ainsi fournies, notamment sous la forme d'une bande transporteuse (figure 4).

Conformément à une caractéristique de l'invention, l'unité d'empilage 21 est constituée, d'une part, par un plan incliné 23 disposé sous ou partiellement dans l'ouverture d'éjection 7'' des cassettes 3 ou cartouches traitées et, d'autre part, par une plate-forme réceptrice 24 située sous l'extrémité inférieure du plan incliné 23 et pouvant être déplacée verticalement, ladite plate forme 24 étant abaissée par paliers, à partir d'une position haute qu'elle occupe lorsqu'elle est vide, en accord avec l'accroissement de la pile formée progressivement par les cassettes 3 ou cartouches successivement éjectées.

Les cassettes 3 ou cartouches éjectées par la machine de traitement 7 glissent donc le long du plan incliné 23, éventuellement muni de rainures ou de nervures de guidage, puis se positionnent une à une, avec emboîtement, sur la cassette 3 ou cartouche supérieure de la pile portée par la plate-forme 24, une butée 23' arrêtant ladite cassette 3 ou cartouche au droit de la pile.

Comme le montre également la figure 4 des dessins annexés, le plan incliné 23 est pourvu d'une butée 25 escamotable, sous forme de tige ou de clapet, déplacée en position d'arrêt des cassettes 3 ou cartouches éjectées, lors du transfert d'une pile de cassettes 3 ou de cartouches de la plate-forme 24 sur l'unité d'évacuation 22.

Selon une caractéristique supplémentaire de l'invention, non représentée aux dessins annexés, les moyens d'actionnement (moteurs, vérins) de l'unité d'évacuation 22, de la plate-forme 24 et la butée amovible 25 sont commandés par le module de contrôle commandant le dispositif d'alimentation 1, ledit module de contrôle étant également relié à des détecteurs et à des capteurs de fin de course pour la détection de la hauteur maximale de la pile sur la plate-forme 24 et la détermination du positionnement de la plate-forme 24 en début d'empilage et lors du transfert de la pile de ladite plate-forme 24 sur l'unité d'évacuation 22.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'alimentation automatique pour cassettes, cartouches ou objets similaires empilables avec emboîtement, destiné au chargement d'une machine de traitement, notamment de lecture et/ou d'écriture, desdites cassettes, cartouches ou objets similaires, caractérisé en ce qu'il est principalement constitué, d'une part, par un magasin (2) essentiellement vertical pour le maintien d'une pile importante de cassettes (3) ou de cartouches gerbées avec emboîtement, d'autre part, par un mécanisme d'extraction (4) d'au moins une cassette (3) ou cartouche au niveau de la partie inférieure (5) de la pile et, enfin, par un moyen de transport (6) de la ou des cassettes (3) ou cartouches extraites de la pile vers l'entrée de la machine de traitement (7), lesdits mécanisme d'extraction (4) et moyen de transport (6) étant actionnés par des moyens d'entraînement commandés par un module de contrôle.

2. Dispositif, selon la revendication 1, caractérisé en ce que le magasin (2), le mécanisme d'extraction (4), le moyen de transport (6) et les moyens d'entraînement sont assemblés en une unité structurelle, laquelle est supportée par au moins un bras articulé (8), notamment au moins pivotant, relié à un châssis (9) monté, de manière amovible, sur la machine de traitement (7) ou disposé à proximité de l'entrée (7') de cette dernière.

3. Dispositif, selon l'une quelconque des revendications 1 et 2, caractérisé en ce que le mécanisme d'extraction (4) est composé, d'une part, de deux bras de soutien (10) de la pile dans le magasin (2), escamotables par pivotement, et, d'autre part, de deux plateaux coulissants (11) pour le dépôt d'une ou de plusieurs cassettes (3) ou cartouches, libérées de la pile lors de l'escamotage temporaire des bras de soutien (10), sur le moyen de transport (6), les bras de soutien (10) et les plateaux coulissants (11) étant actionnés de manière synchronisée.

4. Dispositif, selon la revendication 3, caractérisé en ce que les bras de soutien (10) sont sollicités vers leur position escamotée par des moyens ressorts (12) et en ce que le positionnement des bras de soutien (10) et, notamment, leur escamotage hors de leur position de soutien de la pile sont commandés au moyen d'au moins une came (13) montée sur un axe (14) relié à un moyen d'actionnement et sur laquelle circule un galet palpeur (15) portant les extrémités de deux tiges de commande (16) formant chacune levier par rapport au bras de soutien (10) correspondant autour du point de pivotement considéré (17).

5. Dispositif, selon la revendication 3, caractérisé en ce que les plateaux coulissants (11) sont supportés et déplacés au moyen de disques montés de manière excentrique sur un axe (14) relié à un moyen d'actionnement, entre une position haute, dans laquelle ils sont en contact avec la cassette (3') ou cartouche inférieure de la pile disposée dans le magasin (2), et une position basse, dans laquelle ils sont disposés dans un plan légèrement inférieur par rapport au plan de la partie porteuse (19) d'une ou de plusieurs bande(s) d'un transporteur à bande(s) constituant le moyen de transport (6).

6. Dispositif, selon les revendications 4 et 5, caractérisé en ce que la came (13) et les disques (18) sont montés, en étant assujettis en rotation, sur le même axe (14) entraîné par un moyen d'entraînement sous forme de moteur électrique commandé par le module de contrôle.

7. Dispositif, selon la revendication 6, caractérisé en ce que la configuration de la came (13) et son Positionnement angulaire sur l'axe (14) par rapport aux disques (18) sont tels que, d'une part, lorsque les plateaux coulissants (11) arrivent en position haute, les bras de soutien (10) sont escamotés hors de leur position de soutien de la pile et que, d'autre part, lesdits bras de soutien sont replacés dans leur position de soutien des cassettes (3) ou cartouches de la pile restant dans le magasin (2), au cours du mouvement de descente concomitant des plateaux coulissants (11) et de la pile, en étant insérés entre la dernière cartouche ou cassette (3'') libérée ou extraite et la cassette (3') ou cartouche inférieure de la pile restant dans le magasin (2).

8. Dispositif, selon l'une quelconque des revendications 1 à 7, caractérisé en ce que le mécanisme d'extraction (4) libère les cassettes (3) ou cartouches une à une.

9. Dispositif, selon l'une quelconque des revendications 1 à 8, caractérisé en ce que le module de contrôle est connecté à la machine de traitement (7) en vue de la transmission d'ordres ou d'informations et/ou comporte des moyens capteurs pour la détermination de l'état de chargement de ladite machine de traitement (7), ledit module de contrôle pouvant, en outre, être relié à des détecteurs de niveau de la pile dans le magasin (2) et à des moyens d'alarme lumineux et/ou sonores.

10. Ensemble de chargement/déchargement, notamment pour une machine de traitement de cassettes (3) ou de cartouches empilables avec emboîtement, caractérisé en ce qu'il comporte, d'une part, un dispositif d'alimentation (1) automatique, selon l'une quelconque des revendications 1 à 9, et d'autre part, un dispositif d'évacuation (20) des cassettes (3) ou cartouches traitées, éjectées par la machine de traitement (7), composé d'une unité d'empilage (21) des cassettes (3) ou cartouches éjectées par la machine de traitement (7) et d'une unité d'évacuation (22) des piles de cassettes (3) ou de cartouches ainsi formées, se présentant préférentiellement sous la forme d'une bande transporteuse.

11. Ensemble de chargement/déchargement, selon la revendication 10, caractérisé en ce que l'unité d'empilage (21) est constituée, d'une part, par un plan incliné (23) disposé sous ou partiellement dans l'ouverture d'éjection (7'') des cassettes (3) ou cartouches traitées et, d'autre part, par une plate-forme réceptrice (24) située sous l'extrémité inférieure du plan incliné (23) et pouvant être déplacée verticalement, ladite plate forme (24) étant abaissée par paliers, à partir d'une position haute qu'elle occupe lorsqu'elle est vide, en accord avec l'accroissement de la pile formée progressivement par les cassettes (3) ou cartouches successivement éjectées.

12. Ensemble de chargement/déchargement, selon la revendication 11, caractérisé en ce que le plan incliné (23) est pourvu d'une butée (25) escamotable, déplacée en position d'arrêt des cassettes (3) ou cartouches éjectées, lors du transfert d'une pile de cassettes (3) ou de cartouches de la plate-forme (24) sur l'unité d'évacuation (22).

13. Ensemble de chargement/déchargement, selon les revendications 11 et 12, caractérisé en ce que les moyens d'actionnement de l'unité d'évacuation (22), de la plate-forme (24) et la butée amovible (25) sont commandés par le module de contrôle commandant le dispositif d'alimentation (1), ledit module de contrôle étant également relié à des détecteurs et à des capteurs de fin de course pour la détection de la hauteur maximale de la pile sur la plate-forme (24) et la détermination du Positionnement de la plate-forme (24) en début d'empilage et lors du transfert de la pile de ladite plate-forme (24) sur l'unité d'évacuation (22).
